(19) Europäisches Patentamt
European Patent Office
Office européen des brevets

(11) **EP 2 700 493 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(51) Int Cl.:
**B29C 70/44** (2006.01)    **B29C 70/54** (2006.01)

(21) Anmeldenummer: **13181530.0**

(22) Anmeldetag: **23.08.2013**

(54) **Vakuuminfusionsverfahren und Vorrichtung dafür**

Vacuum infusion moulding method and apparatus therefore

Procédé d'infusion sous vide et appareil pour sa mise en oeuvre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2012 DE 102012107820**

(43) Veröffentlichungstag der Anmeldung:
**26.02.2014 Patentblatt 2014/09**

(73) Patentinhaber: **Deutsches Zentrum für Luft- und Raumfahrt e.V.**
**51147 Köln (DE)**

(72) Erfinder:
• **Hindersmann, Arne**
**21680 Stade (DE)**
• **Kühn, Michael**
**21723 Hollern-Twielenfleth (DE)**
• **Bölke, Jens Ramon**
**21680 Stade (DE)**

(74) Vertreter: **Aisch, Sebastian**
**Gramm, Lins & Partner**
**Patent- und Rechtsanwälte PartGmbB**
**Freundallee 13 a**
**30173 Hannover (DE)**

(56) Entgegenhaltungen:
**WO-A1-2004/000536    WO-A2-2004/101259**
**US-A1- 2007 063 393**

EP 2 700 493 B1

## Beschreibung

Die Erfindung betrifft ein Verfahren zur Herstellung eines Faserverbundbauteils, bei dem ein Faserhalbzeug in ein Formwerkzeug eingebracht und das Faserhalbzeug dann mit einer Vakuumfolie vakuumdicht verschlossen wird, so dass zwischen Formwerkzeug und Vakuumfolie ein Injektionsbereich mit dem Faserhalbzeug gebildet wird, wobei der Injektionsbereich mittels einer Drucksenke evakuiert und anschließend mit einem Matrixharz injiziert wird, um das Faserhalbzeug im Injektionsbereich mit dem Matrixharz zu infiltrieren.

Ein häufig verwendetes Verfahren zur Herstellung von Faserverbundbauteilen ist das sogenannte RTM (Resin Transfer Molding). Dabei wird ein trockenes oder vorgetränktes Faserhalbzeug mit einem Matrixharz injiziert, bis das Faserhalbzeug vollständig mit dem Matrixharz infiltriert bzw. getränkt ist. Nach der vollständigen Infiltration wird dann das Matrixharz meist unter entsprechender Temperierung ausgehärtet.

Um wichtige Prozessparameter günstig zu beeinflussen, wird das in ein Formwerkzeug eingebrachte Faserhalbzeug mit einer Vakuumfolie abgedichtet und anschließend evakuiert, so dass zum einen der Harzverteilungsprozess innerhalb des Faserhalbzeuges begünstigt und zum anderen Lufteinschlüsse in dem Faserhalbzeug vermieden werden, die später zu Fehlstellen in dem fertigen Bauteil führen. Dabei ist der gesamte Prozess autoklavfähig, wodurch die Evakuierung und das Injizieren des Matrixharzes innerhalb des Autoklaven durchführbar ist. Denn hierdurch kann zusätzlich der Umgebungsdruck erhöht werden, was sich weiterhin günstig auf den Infiltrationsprozess auswirkt.

Aus der EP 1 131 195 B1 ist beispielsweise eine Vorrichtung zur Herstellung eines faserverstärkten Kunststoffes bekannt, bei der die herzustellende Form in einem Autoklaven vor dem eigentlichen Herstellungsprozess eingebracht wird. Die Form ist dabei mit einer gemeinsamen Leitung zum Evakuieren der Form sowie zur Injektion des Harzes verbunden, wobei der Vorratsbehälter, welcher das zu injizierende Matrixharz bereitstellt, über eine Drucktransferleitung mit dem Autoklaven zwecks Druckausgleichs in Verbindung steht.

Bei der Herstellung von größeren Bauteilen mittels dieser Technologie ergibt sich jedoch der Nachteil, dass die Fließwege des Matrixharzes innerhalb des Faserhalbzeuges sehr lang werden, so dass ab einer Länge von über 2 Metern notwendig wird, Fließhilfen oder Harzkanäle innerhalb des Injektionsbereiches vorzusehen. Nur so kann bei großen Bauteilen, wie beispielsweise Rotorblätter von Windkraftanlagen oder Flügelschalen von Flugzeugen sichergestellt werden, dass das gesamte Bauteil mit dem Matrixharz infiltriert wurde. Denn je länger der Fließweg innerhalb des Faserhalbzeuges ist, desto größer ist der zu überwindende Widerstand für das Matrixharz, so dass es bei großen zu überbrückenden Entfernungen entsprechende Hilfsmittel bedarf.

Bei der Verwendung von Fließhilfen, beispielsweise eine Vliesmatte, wird die gesamte Laminatfläche mit dieser bedeckt. Die Fließhilfe besitzt einen geringeren Fließwiderstand als das Laminat und sorgt damit für eine flächige Verteilung des Harzes über das gesamte Bauteil, welches dann in Dickenrichtung durchtränkt wird.

Die Verwendung einer Fließhilfe besitzt jedoch vielerlei Nachteile. So ist beispielsweise der Harzverbrauch bei großen Bauteilen signifikant höher, da nach der Infiltration des Faserhalbzeuges Harz in der Fließhilfe verbleibt. Darüber hinaus kann die Fließhilfe nur einmal verwendet werden, da das Harz in der Fließhilfe in der Regel mit aushärtet. Außerdem muss bei der Bauteilkonstruktion das zusätzliche Material der Fließhilfe mit berücksichtigt werden, wobei es nicht selten vorkommt, dass die ausgehärtete Fließhilfe anschließend von dem fertigen Bauteil getrennt werden muss. Dies kann unter Umständen zu einer Beschädigung des Bauteils führen.

Bei der Verwendung von Harzkanälen werden innerhalb des Injektionsbereiches, der mit Hilfe einer Drucksenke evakuiert wird und das Faserhalbzeug enthält, Kanäle in das Faserhalbzeug eingebracht, mit denen das Matrixharz innerhalb des Injektionsbereiches an die entsprechenden Stellen transportiert wird. Auch die Verwendung von Harzkanälen weist mehrere Nachteile auf, insbesondere die Tatsache, dass bei großen Bauteilen viel überschüssiges Harz in den Harzkanälen zurückbleibt, die jedoch anschließend nicht mehr gereinigt werden können. Hierdurch entsteht ebenfalls ein signifikant erhöhter Harzverbrauch. Darüber hinaus müssen die Harzkanäle in der Konstruktion mitberücksichtigt werden, was insbesondere die Kosten für die Bereitstellung des Formwerkzeuges erhöhen. Aufgrund der Nicht-Wiederverwendbarkeit der Harzkanäle bedingt durch die Harzrückstände eignen sich derlei Techniken für die Serienproduktion nur unter ganz bestimmten Umständen.

Aus Alms J.B.; Advani S.G.; Glancey J.L.: "Liquid Composite Molding control methodologies using Vaccum Induced Preform Relaxation", Composites Part A: Application Science Manufactor 2011 :57-65 ist ein Verfahren zur Fließunterstützung bei der Herstellung von Faserverbundbauteilen bekannt, bei dem eine Vakuumkammer von außen auf die Vakuumfolie aufgebracht und anschließend dieser Teilbereich dann evakuiert wird, wodurch sich ein geringerer Differenzdruck zwischen den Faserlagen und der äußeren Umgebung einstellen lässt. Hierdurch wird lokal die Permeabilität des Faserhalbzeuges verbessert, so dass in diesem Bereich das Matrixharz die entsprechenden Faserlagen schneller infiltriert. Mit Hilfe einer entsprechenden Sensorvorrichtung kann dann die Vakuumkammer an entsprechenden expliziten Bereichen verschoben werden, um dort eine entsprechende Fließhilfe zu geben.

Ein Nachteil dieses Verfahrens ist es jedoch, dass aufgrund des komplizierten Aufbaus die Kosten signifikant höher sind. Außerdem ist das Verfahren grundsätzlich erst einmal nicht autoklavfähig, da die gesamte Anlage nicht prozesssicher in einem Autoklaven betrieben werden kann. Außerdem ist dieses Verfahren für sehr große Faserverbundbauteile, wie beispielsweise Rotorblätter oder Flügelschalen von Flugzeugen ungeeignet, da derartige Bauteile in der Regel komplexe Formen aufweisen, die mit der dort vorgestellten Anlage nicht hinreichend abgebildet werden können, und zum anderen die Infiltrationsdauer sich durch die Verwendung stark erhöhen würde. Dies wäre allerdings wieder ein erheblicher Kostentreiber.

Aus der WO 2004/101259 A2 sind ein Verfahren gemäß dem Oberbegriff des Anspruchs 1 und eine Vorrichtung gemäß dem Oberbegriff des Anspruchs 7 bekannt.

Aus der US 2007/063393 A1 ist bekannt, dass außerhalb der Vakuumfolie ein Hohlkörper angeordnet wird, der die Vakuumfolie aufgrund der Evakuierung des Hohlkörpers anhebt, so dass sich zwischen Faserhalbzeug und Vakuumfolie ein Fließkanal bilden kann.

Vor diesen Hintergründen ist es Aufgabe der vorliegenden Erfindung ein verbessertes Verfahren und eine verbesserte Vorrichtung anzugeben, mit dem der Harzverbrauch und die Herstellungskosten insbesondere bei großen Faserverbundbauteilen, wie beispielsweise Rotorblätter oder Flügelschalen, verringert werden können, ohne hierbei die Prozesssicherheit des gesamten Herstellungsprozesses zu beeinträchtigen.

Die Aufgabe wird erfindungsgemäß gelöst mit dem Verfahren gemäß Anspruch 1. Die Aufgabe wird im Übrigen auch gelöst mit der Vorrichtung gemäß Anspruch 7. Vorteilhafte Ausgestaltungen des Verfahrens und der Vorrichtung finden sich in den entsprechenden Unteransprüchen.

Zur Lösung der Aufgabe wird demnach ein Verfahren angegeben, bei dem in Schritt a) mindestens ein länglicher, an einer Längsseite offener Hohlkörper bereitgestellt wird. Ein solcher länglicher Hohlkörper kann beispielsweise ein Hohlprofil sein, dessen Stirnseiten mit einer Seitenwand verschlossen sind. Eine Längsseite des Hohlprofils ist offen ausgestaltet, beispielsweise in der Form, dass an dieser Längsseite keine Seitenwand vorgesehen ist. Ein derartiger länglicher, an einer Längsseite offener Hohlkörper kann somit beispielsweise ein längliches U-Profil sein, an dessen Stirnseiten jeweils eine Seitenwand vorgesehen ist, die das U-Profil an den Stirnseiten verschließen.

Mit "länglich" bei dem länglichen Hohlkörper ist im Sinne der vorliegenden Erfindung gemeint, dass die Längsausdehnung des Hohlkörpers ein Vielfaches von seiner Breite ist, so dass sich ein kanalförmiger Hohlkörper bildet. Der längliche, an einer Längsseite offene Hohlkörper soll in seiner Ausdehnung dabei einem zum Harztransport verwendeten Harzkanal im Wesentlichen entsprechen. Der längliche Hohlkörper kann die sonst verwendeten Harzkanäle ersetzen.

Mit "länglich" ist jedoch nicht gemeint, dass der Hohlkörper stets gerade sein muss. Vielmehr sind je nach herzustellender Bauteilform Krümmungen, Knicke sowie auch gekreuzte Hohlkörper denkbar. Durch den länglichen Hohlkörper wird aufgrund seiner Ausdehnung schließlich eine Fließrichtung eines Matrixharzes vorgegeben.

Erfindungsgemäß wird nun in Schritt b) vorgeschlagen, dass dieser mindestens eine längliche Hohlkörper mit der offenen Längsseite auf einem Teilbereich der Vakuumfolie außerhalb des Injektionsbereiches oberhalb eines Teilbereiches des Faserhalbzeuges so angeordnet, dass ein vakuumdichter Hohlraum zwischen dem mit dem Hohlkörper abgedeckten Teilbereich der Vakuumfolie und dem Hohlkörper selber gebildet wird. Der längliche Hohlkörper ist dabei so ausgebildet, dass er den entstehenden Hohlraum beim Anordnen auf der Vakuumfolie vakuumdicht verschließt.

In dieser Konstellation wird der längliche Hohlkörper auf der Vakuumfolie so angeordnet, dass er über einen bestimmten Teilbereich des Faserhalbzeuges, welches unter der Vakuumfolie vakuumdicht verschlossen ist, liegt. Vorzugsweise wird der mindestens eine längliche Hohlkörper auf der Vakuumfolie so angeordnet, dass seine Position und seine längliche Ausrichtung einen möglichen Harzkanal zum Infiltrieren des Faserhalbzeuges mit einem Matrixharz entspricht.

Mit anderen Worten, der längliche Hohlkörper wird mit seiner offenen Längsseite auf der Vakuumfolie außerhalb des Injektionsbereiches und oberhalb des unter der Vakuumfolie liegenden Faserhalbzeuges angeordnet.

In Schritt c) wird nun erfindungsgemäß der durch das Anordnen des länglichen Hohlkörpers auf der Vakuumfolie gebildete Hohlraum mittels einer mit dem Hohlraum in Fluidverbindung stehenden Drucksenke evakuiert. Das Evakuieren des Hohlraumes erfolgt vorzugsweise nach der Evakuierung des Injektionsbereiches bzw. des Faserhalbzeuges oder auch während dessen, um so ein Verscheren der Vakuumfolie zu vermeiden, was den herbeizuführenden Effekt beeinträchtigen könnte.

Das Evakuieren des Hohlraumes mittels der Drucksenke im Schritt c) erfolgt dabei derart, dass das Faservolumen eines in Wirkverbindung mit dem evakuierten Hohlraum stehenden Faserbereiches des Faserhalbzeuges gegenüber den übrigen Faserbereichen des Faserhalbzeuges zur Bildung mindestens eines Harzfließkanales in dem Faserhalbzeug verringert wird. Denn durch das Evakuieren des Hohlraumes wird die Druckdifferenz zwischen dem Faserbereich des Faserhalbzeuges, das von dem Hohlraum abgedeckt wird, und der äußeren Umgebung dieses Faserbereiches verringert, so dass der auf dem Faserhalbzeug aufgrund der Evakuierung des Injektionsbereiches liegende Druck geringer wird. Dies führt dazu, dass das Faservolumen in diesem lokalen Faserbereich verringert wird, was die Permeabilität des Faserhalbzeuges in diesem Bereich erhöht. Mit der Erhöhung der Permeabilität des Faserhalbzeuges in diesem lokalen Bereich wird der Fließwiderstand gegenüber den anderen Faserbereichen, die nicht von einem evakuierten Hohlraum abgedeckt sind, verringert, so dass hierdurch der Effekt eines in dem Faserhalbzeug liegenden Harzfließkanals entsteht.

Faserbereiche, die in Wirkverbindung mit dem evakuierten Hohlraum stehen, sind dabei jene Bereiche des Faserhalbzeuges, die von dem Hohlraum des Hohlkörpers abgedeckt und dessen Permeabilität aufgrund der Evakuierung des Hohlraumes verändert wird. Mit anderen Worten, Faserbereiche, die in Wirkverbindung mit dem evakuierten Hohlraum stehen, sind diejenigen Faserbereiche, bei denen sich die Permeabilität aufgrund der Evakuierung des entsprechenden Hohlraumes gegenüber anderen Faserbereichen des Faserhalbzeuges verändert.

Anschließend wird in Schritt d) zur Infiltration des Faserhalbzeuges mit einem Matrixharz der mindestens eine durch die Evakuierung des Hohlraumes gebildete Harzfließkanal in dem Faserhalbzeug mit einem Matrixharz injiziert, so dass das Faserhalbzeug über den Harzfließkanal mit dem Matrixharz infiltriert wird. Eine Injizierung des Matrixharzes in den Harzfließkanal führt aufgrund des geringeren Fließwiderstandes in diesen Faserbereichen dazu, dass der in dem Faserhalbzeug gebildete Harzfließkanal mit Matrixharz gefüllt wird, von wo aus dann die weitere Umgebung, d.h. andere angrenzende Faserbereiche des Faserhalbzeuges, über diesen Harzfließkanal mit Matrixharz infiltriert werden können.

Mit Hilfe dieser Erfindung wird es möglich, auf Harzkanäle oder Fließhilfen innerhalb der Anlage zu verzichten, wodurch sich insbesondere bei großen Faserverbundbauteilen der benötigte Harzverbrauch signifikant reduzieren lässt. Darüber hinaus kann durch den Verzicht der vorgenannten Hilfsmittel eine Kostensenkung bei der Herstellung großer Faserverbundbauteile erreicht werden, ohne die Prozesssicherheit des gesamten Herstellungsprozesses nachteilig zu beeinträchtigen.

Nach der vollständigen Infiltration der den mindestens einen Harzfließkanal bindenden Faserbereiche und/oder des vollständigen Faserhalbzeuges werden bevorzugterweise die Hohlkörper geöffnet, so dass sich in dem durch die Hohlkörper gebildeten Hohlraum ein Umgebungsdruck einstellt, wodurch in den Bereichen der gebildeten Harzfließkanäle keine Abdrücken in dem späteren Bauteil entstehen. Durch das Öffnen der Hohlkörper und Einstellen des Umgebungsdruckes in den Hohlräumen wird wieder der hohe Differenzdruck zwischen innerem Injektionsbereich und äußerer Umgebung eingestellt, so dass sich das Faservolumen in diesen Bereichen langsam wieder erhöht. Dies führt zu einem Auspressen des überschüssigen Matrixharzes von den gebildeten Harzfließkanälen in die umgebenden Faserbereiche.

Vorteilhafterweise ist der Hohlraumdruck beim Evakuieren des Hohlraumes geringer als der beim Evakuieren des Injektionsbereiches erzeugte Injektionsdruck, wobei sowohl der Hohlraumdruck als auch der Injektionsdruck geringer sind als der Umgebungsdruck außerhalb des Injektionsbereiches.

Hierdurch wird eine maximale Verringerung des Faservolumens und Erhöhung der Permeabilität erreicht.

Je nach Größe und Fläche des herzustellenden Faserverbundbauteils ist es besonders vorteilhaft, wenn eine Mehrzahl von Hohlkörpern auf der Vakuumfolie zur Bildung von einer Mehrzahl von Harzfließkanälen in dem Faserhalbzeug vorgesehen sind, so dass eine vollständige Infiltration des Faserhalbzeuges auch bei großen zu infiltrierenden Flächen sichergestellt werden kann.

Gemäß der Erfindung sind eine Mehrzahl von Hohlkörpern auf der Vakuumfolie kreuzweise derart angeordnet, dass durch die von den Hohlkörpern gebildeten Harzfließwege das Faserhalbzeug in mehrere, durch die Harzfließwege getrennten Teilbereiche unterteilt wird. Durch die Unterteilung des Faserhalbzeuges in durch die Harzfließwege voneinander getrennten Teilbereiche wird das zu infiltrierende Gesamtvolumen in mehrere kleinere Volumen unterteilt, was die Prozesssicherheit bezüglich einer vollständigen Infiltration sicherstellt und darüber hinaus auch die Injektionsdauer insbesondere großer Faserverbundbauteile verringert, was eine Kostenreduktion darstellt.

Des Weiteren ist es vorteilhaft, wenn der Hohlraumdruck während der Infiltration so eingestellt und angepasst wird, dass ein Voreilen des Matrixharzes vermieden oder verringert wird. Durch eine entsprechende Drucksteuerung lassen sich somit die klassischen Nachteile des RTM-Verfahrens reduzieren.

In einer weiteren vorteilhaften Ausführungsform wird das Matrixharz beim Injizieren in die gebildeten Harzfließkanäle mittels eines in dem Hohlkörper vorgesehenen Heizelement temperiert, wodurch die Viskosität des Matrixharzes verringert und somit der Fließwiderstand insgesamt verkleinert werden kann. Hierdurch lässt sich ebenfalls eine entsprechende Fließsteuerung des Matrixharzes in dem Bauteil realisieren.

Die durch den evakuierten Hohlraum gebildeten Harzfließkanäle in dem Faserhalbzeug dienen somit dazu, das Matrixharz in dem Faserhalbzeug zu verteilen, um so eine vollständige Infiltration des gesamten Faserhalbzeuges zu erreichen.

Durch die Anordnung und Evakuierung der Hohlkörper werden die Harzfließkanäle derart gebildet, dass das in die Harzfließkanäle injizierte Matrixharz zur vollständigen Infiltration des Faserhalbzeuges transportiert wird.

Die Erfindung wird anhand der beigefügten Zeichnungen beispielhaft näher erläutert. Es zeigen:

Figur 1 - schematische Schnittdarstellung der erfindungsgemäßen Vorrichtung;

Figur 2 - schematische Draufsicht der erfindungsgemäßen Vorrichtung mit einer kreuzweisen Anordnung der Hohlkörper.

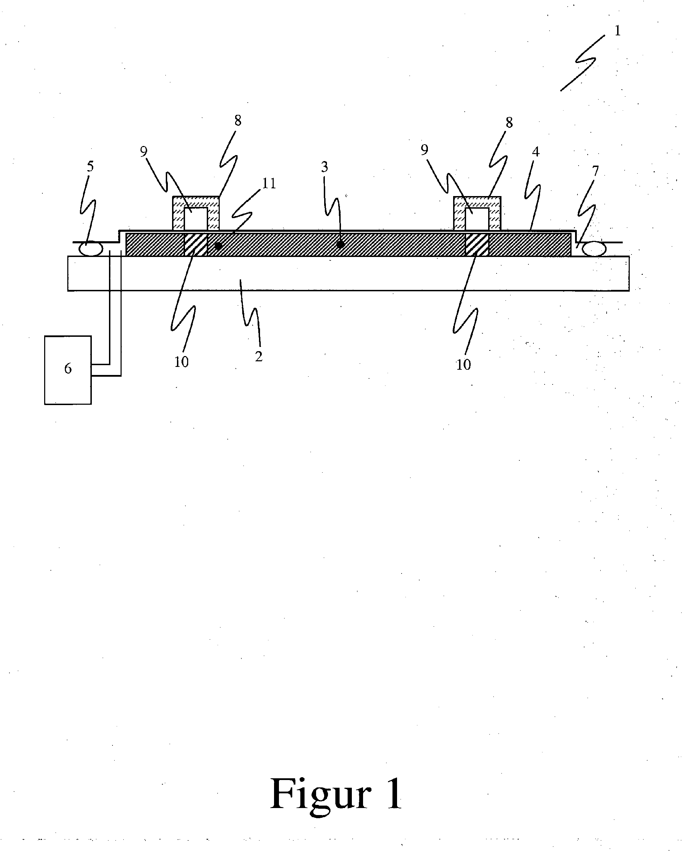

Figur 1 zeigt schematisch den Schnitt durch die erfindungsgemäße Vorrichtung 1, die ein Formwerkzeug 2 zur Bildung der formgebenden Struktur des späteren Faserverbundbauteils aufweist. In das Formwerkzeug 2 ist ein Faserhalbzeug 3 eingebracht, das mittels einer Vakuumfolie 4 und einer äußeren Randdichtung 5 vakuumdicht verschlossen und versiegelt ist. Über eine erste Drucksenke 6 kann der Injektionsbereich 7 evakuiert werden, so dass ein Injektionsdruck pi einstellbar ist. Durch die Evakuierung des Injektionsbereiches 7 durch die Drucksenke 6 wird schließlich auch das Faserhalbzeug evakuiert, wodurch Lufteinschlüsse in den Faserlagen entfernt werden.

Auf der Vakuumfolie 4 werden nun längliche Hohlkörper 8 angeordnet, die außerhalb des Injektionsbereiches 7 auf der Vakuumfolie 4 platziert werden. Die länglichen Hohlkörper 8 weisen ein U-Profil auf, das an den Stirnseiten verschlossen ist. Durch die nach unten gerichtete offene Längsseite des länglichen Hohlkörpers 8 wird ein Hohlraum 9 gebildet, der in Kontakt mit der Vakuumfolie 4 in diesem Bereich und der Innenwand des Hohlkörpers 8 steht. Mittels einer nicht dargestellten weiteren Drucksenke lässt sich nun dieser so gebildete Hohlraum 9 ebenfalls evakuieren, so dass sich hier ein weiterer Hohlraumdruck $p_h$ einstellen lässt. Vorzugsweise gilt:

$$p_i > p_h.$$

Unterhalb des Hohlkörpers 8 und der Vakuumfolie 4 im Injektionsbereich 7 entsteht durch die Evakuierung des Hohlraumes 9 ein Faserbereich 10 des Faserhalbzeuges 3, der in Wirkverbindung mit dem evakuierten Hohlraum 9 steht. In diesen Faserbereichen 10 des Faserhalbzeuges 3 wird aufgrund des evakuierten Hohlraumes 9 das Faservolumen lokal verringert, wodurch die Permeabilität dieses Faserbereiches 10 erhöht wird. Dies erzeugt einen geringeren Fließwiderstand bei der Injizierung des Matrixharzes, so dass auf diese Weise in dem Faserhalbzeug 3 natürliche Fließwege gebildet werden, mit der das Matrixharz auch in großen Faserverbundbauteilen verteilt werden kann, ohne dass hierfür Hilfsmittel wie Fließhilfen oder Harzkanäle benötigt werden.

Die mit dem evakuierten Hohlraum in Wirkverbindung stehenden Faserbereiche 10 sind dabei auf dem von dem Hohlkörper 8 abgedeckten Bereich lokal beschränkt, so dass benachbarte Bereiche 11 nicht betroffen sind. Die so mit dem evakuierten Hohlraum 9 in Wirkverbindung stehenden Faserbereiche 10 bilden nach vollständiger Evakuierung des Hohlraumes 9 und Einstellung des Hohlraumdruckes $p_h$ einen entsprechenden Fließkanal bzw. Harzfließkanal innerhalb des Faserhalbzeuges 3.

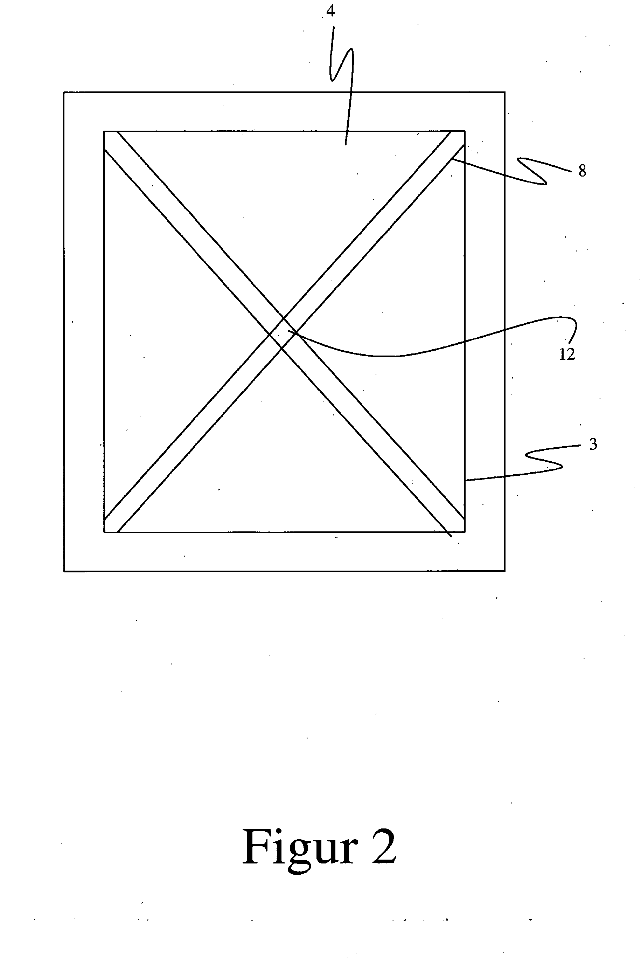

Figur 2 zeigt eine schematische Draufsicht auf die erfindungsgemäße Vorrichtung 1 mit den länglichen Hohlkörpern 8, die auf einer Vakuumfolie 4 angeordnet sind.

Die Hohlkörper 8 sind dabei auf der Vakuumfolie 4 so angeordnet, dass sie sich in einen Kreuzungsbereich 12 kreuzen, wodurch das unter der Vakuumfolie 4 liegende Faserhalbzeug 3 in mehrere Teilbereiche unterteilt wird. Hierdurch wird das zu infiltrierende Gesamtvolumen in mehrere kleine Volumen unterteilt, was die Prozesssicherheit hinsichtlich der vollständigen Infiltration des gesamten Faserhalbzeuges sicherstellt.

Nach Entfernen der Hohlkörper 8 von der Vakuumfolie 4 verteilt sich das in den Fließkanälen 10 angesammelte Matrixharz auf die umliegenden Bereiche, so dass keinerlei negative Rückstände in dem Faserhalbzeug verbleiben.

Ein weiterer Vorteil dieser Vorrichtung und des vorliegenden Verfahrens ist darüber hinaus die Tatsache, dass das gesamte Verfahren grundsätzlich autoklavfähig ist, da keinerlei große und komplizierte Anlagenelemente benötigt werden.

**Patentansprüche**

1. Verfahren zur Herstellung eines Faserverbundbauteils, bei dem ein Faserhalbzeug (3) in ein Formwerkzeug (2) eingebracht und das Faserhalbzeug (3) dann mit einer Vakuumfolie (4) vakuumdicht verschlossen wird, so dass zwischen Formwerkzeug (2) und Vakuumfolie (4) ein Injektionsbereich (7) mit dem Faserhalbzeug (3) gebildet wird, wobei der Injektionsbereich (7) mittels einer Drucksenke (6) evakuiert und anschließend mit einem Matrixharz injiziert wird, um das Faserhalbzeug (3) in den Injektionsbereich (7) mit dem Matrixharz zu infiltrieren, **gekennzeichnet durch**

   a) Bereitstellen mindestens eines länglichen, an einer Längsseite offenen Hohlkörpers (8),
   b) Anordnen des mindestens einen länglichen Hohlkörpers (8) mit der offenen Längsseite auf einem Teilbereich der Vakuumfolie (4) außerhalb des Injektionsbereiches (7) zur Bildung eines vakuumdichten Hohlraumes (9) zwischen dem mit dem Hohlkörper (8) abgedeckten Teilbereich der Vakuumfolie (4) und dem Hohlkörper (8),
   c) Evakuieren des Hohlraumes (9) mittels einer mit dem Hohlraum (9) in Fluidverbindung stehenden Drucksenke derart, dass das Faservolumen eines in Wirkverbindung mit dem evakuierten Hohlraum (9) stehenden Faserbereiches (10) des Faserhalbzeuges (3) gegenüber den übrigen Faserbereichen (11) des Faserhalbzeuges (3) zur Bildung mindestens eines Harzfließkanales in dem Faserhalbzeug (3) verringert wird, und
   d) Injizieren des Matrixharzes in den mindestens einen Harzfließkanal des Faserhalbzeuges (3) so, dass das Faserhalbzeug (3) über den Harzfließkanal mit dem Matrixharz infiltriert wird, **dadurch** gekennzeichnet, dass eine Mehrzahl von Hohlkörpern (8) auf der Vakuumfolie kreuzweise (10) derart angeordnet werden, dass **durch** die von den Hohlkörpern (8) gebildeten Harzfließwege das Faserhalbzeug (3) in mehrere **durch** die Harzfließwege getrennten Teilbereiche unterteilt wird.

2. Verfahren nach Anspruch 1, **dadurch gekennzeichnet, dass** nach vollständiger Infiltration der den mindestens einen Harzfließkanal bildenden Faserbereiche (10) des Faserhalbzeuges (3) mit dem Matrixharz der Hohlkörper (8) geöffnet wird, um in dem Hohlraum (9) Umgebungsdruck ($p_o$) einzustellen.

3. Verfahren nach Anspruch 1 oder 2, **dadurch gekennzeichnet, dass** beim Evakuieren des Hohlraumes (9) ein Hohlraumdruck ($p_h$) erzeugt wird, der geringer ist als der beim Evakuieren des Injektionsbereiches (7) erzeugte Injektionsdruck ($p_i$), wobei sowohl der Hohlraumdruck ($p_h$) als auch der Injektionsdruck ($p_i$) geringer sind als der Umgebungsdruck ($p_o$) außerhalb des Injektionsbereiches (7).

4. Verfahren nach einem der vorhergehenden Ansprüche, **dadurch gekennzeichnet, dass** eine Mehrzahl von Hohlkörpern (8) auf der Vakuumfolie (4) zur Bildung von einer Mehrzahl von Harzfließkanälen in dem Faserhalbzeug (3) vorgesehen sind.

5. Verfahren nach einem der vorhergehenden Ansprüche, **dadurch gekennzeichnet, dass** in dem mindestens einen Hohlraum (9) ein Hohlraumdruck (ph) während der Infiltration derart eingestellt wird, dass ein Voreilen des Matrixharzes vermieden oder verringert wird.

6. Verfahren nach einem der vorhergehenden Ansprüche, **dadurch gekennzeichnet, dass** das Matrixharz in den Harzfließkanälen mittels eines in dem Hohlkörper (8) vorgesehenen Heizelement temperiert wird.

7. Vorrichtung (1) zur Herstellung eines Faserverbundbauteils, eingerichtet zur Durchführung des Verfahrens nach einem der vorhergehenden Ansprüche, mit einem Formwerkzeug (2), in das ein Faserhalbzeug (3) einbringbar ist, mit einer Vakuumfolie (4) zum vakuumdichten Verschließen des Faserhalbzeuges (3), mit einer ersten Drucksenke (6) zum Evakuieren des Faserhalbzeuges (3) und mit mindestens einem länglichen Hohlkörper (8), der an einer Längsseite zur Bildung eines Hohlraumes zwischen Vakuumfolie (4) und Hohlkörper (8) geöffnet ist, wenn der Hohlkörper mit der offenen Längsseite auf der Vakuumfolie (4) angeordnet wird, wobei mittels einer zweiten Drucksenke, die mit dem Hohlraum (9) in Fluidverbindung steht, der Hohlraum (9) evakuierbar ist, um Harzfließkanäle (10) in dem Faserhalbzeug zu bilden, **dadurch gekennzeichnet, dass** eine Mehrzahl von Hohlkörpern (8) auf der Vakuumfolie (4) vorgesehen sind, die kreuzweise (10) derart angeordnet sind, dass durch die von den Hohlkörpern (8) gebildeten Harzfließwege das Faserhalbzeug in mehrere durch die Harzfließwege getrennte Teilbereiche unterteilt werden kann.

8. Vorrichtung nach Anspruch 7, **dadurch gekennzeichnet, dass** der Hohlkörper (8) ein Heizelement zum Temperieren des Matrixharzes in den Harzfließkanälen aufweist.

**Claims**

1. Method for the manufacturing of a fibre-composite component, in which a semifinished fibre product (3) is inserted into a moulding tool (2) and the semifinished fibre product (3) is then closed by a vacuum film (4) in a vacuum-tight manner, such that an injection region (7) with the semifinished fibre product (3) is formed between moulding tool (2) and vacuum film (4), the injection region (7) being evacuated by means of a pressure sink (6) and subsequently being injected with a matrix resin in order to infiltrate the semifinished fibre product (3) in the injection region (7) with the matrix resin, **characterized by**

   a) providing at least one elongated hollow object (8) which is open on one longitudinal side,
   b) arranging the at least one elongated hollow object (8) with the open longitudinal side on a part-region of the vacuum film (4) outside the injection region (7) for the formation of a vacuum-tight cavity (9) between the part-region of the vacuum film (4) which is covered by the hollow object (8) and the hollow object (8) itself,
   c) evacuating the cavity (9) by means of a pressure sink, which has a fluid connection to the cavity (9), in such a manner that the fibre volume of a fibrous region (10), which is in operational connection with the evacuated cavity (9), of the semifinished fibre product (3) is reduced in relation to the other fibrous regions (11) of the semifinished fibre product (3) for the formation of at least one resin flow duct in the semifinished fibre product (3), and
   d) injecting the matrix resin into the at least one resin flow duct of the semifinished fibre product (3) such that the semifinished fibre product (3) is infiltrated with the matrix resin via the resin flow duct, **characterized in that** a plurality of hollow objects (8) are arranged on the vacuum film in a crosswise pattern (10) in such a manner that the semifinished fibre product (3) is subdivided by the resin flow paths formed by the hollow objects (8) into a plurality of part-regions which are separated by the resin flow paths.

2. Method according to Claim 1, **characterized in that** after complete infiltration of the fibrous regions (10), which form the at least one resin flow duct, of the semifinished fibre product (3) with the matrix resin, the hollow object (8) is opened in order to set ambient pressure (po) in the cavity (9).

3. Method according to Claim 1 or 2, **characterized in that** in the course of evacuating the cavity (9) a cavity pressure ($p_h$) is created which is lower than the injection pressure ($p_i$) created in the course of evacuating the injection region (7), both the cavity pressure ($p_h$) and the injection pressure ($p_i$) being lower than the ambient pressure ($p_0$) outside the injection region (7).

4. Method according to one of the preceding claims, **characterized in that** a plurality of hollow objects (8) are provided on the vacuum film (4) for the formation of a plurality of resin flow ducts in the semifinished fibre product (3).

5. Method according to one of the preceding claims, **characterized in that** in the at least one cavity (9) a cavity pressure ($p_h$) is set during infiltration in such a manner that a rapid advancement of the matrix resin is avoided or reduced.

6. Method according to one of the preceding claims, **characterized in that** the matrix resin in the resin flow ducts is temperature-controlled by means of a heating element provided in the hollow object (8).

7. Device (1) for the manufacturing of a fibre-composite component, equipped for the implementation of the method according to one of the preceding claims, having a moulding tool (2), into which a semifinished fibre product (3) can be inserted, having a vacuum film (4) for the vacuum-tight closing of the semifinished fibre product (3), having a first pressure sink (6) for evacuating the semifinished fibre product (3) and having at least one elongated hollow object (8), which is open on one side for the formation of a cavity between vacuum film (4) and hollow object (8) in the event that the hollow object is arranged with the open longitudinal side on the vacuum film (4), wherein by means of a second pressure sink, which has a fluid connection to the cavity (9), the cavity (9) can be evacuated in order to form resin flow ducts (10) in the semifinished fibre product, **characterized in that** a plurality of hollow objects (8) are provided on the vacuum film (4) in a crosswise pattern (10) in such a manner that the semifinished fibre product can be subdivided by the resin flow paths formed by the hollow objects (8) into a plurality of part-regions which are separated by the resin flow paths.

8. Device according to Claim 7, **characterized in that** the hollow object (8) has a heating element for the temperature control of the matrix resin in the resin flow ducts.

**Revendications**

1. Procédé de fabrication d'un composant composite renforcé par des fibres, dans lequel un produit semi-fini fibreux (3) est introduit dans un outil de formage (2) et le produit semi-fini fibreux (3) est ensuite fermé de manière étanche au vide avec un film de mise sous vide (4) de telle sorte qu'entre l'outil de formage (2) et le film de mise sous vide (4) soit formée une zone d'injection (7) avec le produit semi-fini fibreux (3), la zone d'injection (7) étant évacuée au moyen d'une source de dépression (6) et ensuite étant injectée avec une résine de matrice, afin d'infiltrer le produit semi-fini fibreux (3) dans la zone d'injection (7) avec la résine de matrice, **caractérisé par**

   a) la fourniture d'au moins un corps creux allongé (8), ouvert au niveau d'un côté longitudinal,
   b) l'agencement de l'au moins un corps creux allongé (8) avec le côté longitudinal ouvert sur une zone partielle du film de mise sous vide (4) à l'extérieur de la zone d'injection (7) pour former une cavité étanche au vide (9) entre la zone partielle recouverte par le corps creux (8) du film de mise sous vide (4) et le corps creux (8),
   c) l'évacuation de la cavité (9) au moyen d'une source de dépression en liaison fluidique avec la cavité (9) de telle sorte que le volume de fibres d'une zone de fibres (10) en liaison fonctionnelle avec la cavité évacuée (9) du produit semi-fini fibreux (3) soit réduit par rapport aux autres zones de fibres (11) du produit semi-fini fibreux (3) pour former au moins un canal d'écoulement de résine dans le produit semi-fini fibreux (3), et
   d) l'injection de la résine de matrice dans l'au moins un canal d'écoulement de résine du produit semi-fini fibreux (3), de telle sorte que le produit semi-fini fibreux (3) soit infiltré par le biais du canal d'écoulement de résine avec la résine de matrice,

   **caractérisé en ce qu'**une pluralité de corps creux (8) sont disposés en croix (10) sur le film de mise sous vide de telle sorte que les chemins d'écoulement de résine formés par les corps creux (8) divisent le produit semi-fini fibreux (3) en plusieurs zones partielles séparées par les chemins d'écoulement de résine.

**2.** Procédé selon la revendication 1, **caractérisé en ce qu'**après l'infiltration complète des zones de fibres (10) formant l'au moins un canal d'écoulement de résine du produit semi-fini fibreux (3) avec la résine de matrice, le corps creux (8) est ouvert afin d'ajuster la pression de l'environnement (po) dans la cavité (9).

**3.** Procédé selon la revendication 1 ou 2, **caractérisé en ce que** lors de l'évacuation de la cavité (9), une pression de cavité ($p_h$) est produite, laquelle est inférieure à la pression d'injection ($p_i$) produite lors de l'évacuation de la zone d'injection (7), la pression de cavité ($p_h$) ainsi que la pression d'injection ($p_i$) étant toutes deux inférieures à la pression de l'environnement (po) à l'extérieur de la zone d'injection (7).

**4.** Procédé selon l'une quelconque des revendications précédentes, **caractérisé en ce qu'**une pluralité de corps creux (8) sont prévus sur le film de mise sous vide (4) pour former une pluralité de canaux d'écoulement de résine dans le produit semi-fini fibreux (3).

**5.** Procédé selon l'une quelconque des revendications précédentes, **caractérisé en ce que** dans l'au moins une cavité (9) est ajustée une pression de cavité ($p_h$) pendant l'infiltration, de manière à éviter ou réduire une avancée prématurée de la résine de matrice.

**6.** Procédé selon l'une quelconque des revendications précédentes, **caractérisé en ce que** la résine de matrice est régulée en température dans les canaux d'écoulement de résine au moyen d'un élément chauffant prévu dans le corps creux (8).

**7.** Dispositif (1) de fabrication d'un composant composite renforcé par des fibres, prévu pour mettre en oeuvre le procédé selon l'une quelconque des revendications précédentes, comprenant un outil de formage (2) dans lequel peut être introduit un produit semi-fini fibreux (3), un film de mise sous vide (4) pour fermer de manière étanche au vide le produit semi-fini fibreux (3), une première source de dépression (6) pour évacuer le produit semi-fini fibreux (3) et au moins un corps creux allongé (8) qui est ouvert au niveau d'un côté longitudinal pour former une cavité entre le film de mise sous vide (4) et le corps creux (8), lorsque le corps creux est disposé avec le côté longitudinal ouvert sur le film de mise sous vide (4), la cavité (9) pouvant être évacuée au moyen d'une deuxième source de dépression qui est en liaison fluidique avec la cavité (9), afin de former des canaux d'écoulement de résine (10) dans le produit semi-fini fibreux, **caractérisé en ce qu'**une pluralité de corps creux (8) sont prévus sur le film de mise sous vide (4), lesquels sont disposés en croix (10) de telle sorte que les chemins d'écoulement de résine formés par les corps creux (8) puissent diviser le produit semi-fini fibreux en plusieurs zones partielles séparées par les chemins d'écoulement de résine.

**8.** Dispositif selon la revendication 7, **caractérisé en ce que** le corps creux (8) présente un élément chauffant pour réguler en température la résine de matrice dans les canaux d'écoulement de résine.

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1131195 B1
- WO 2004101259 A2
- US 2007063393 A1

**In der Beschreibung aufgeführte Nicht-Patentliteratur**

- **ALMS J.B. ; ADVANI S.G. ; GLANCEY J.L.** Liquid Composite Molding control methodologies using Vaccum Induced Preform Relaxation. *Composites Part A: Application Science Manufactor,* 2011, 57-65